# FASCICULE DE BREVET EUROPEEN

(11) **EP 3 832 403 B1**
(45) Date de publication et mention de la délivrance du brevet: **22.10.2025**
(21) Numéro de dépôt: 19214102.6
(22) Date de dépôt: 06.12.2019
(51) Int. Cl.: G06V 40/70, G04G 21/02, G06F 21/32, G06F 21/36, H04W 12/06

(54) **PROCÉDÉ DE SÉCURISATION D'ACCÈS À UNE MONTRE**
SICHERUNGSVERFAHREN FÜR DEN ZUGRIFF AUF EINE ARMBANDUHR
METHOD OF SECURING ACCESS TO A WATCH

(43) Date de publication de la demande: 09.06.2021
(73) Titulaire: Tissot S.A., 2400 Le Locle (CH)
(72) Inventeur: FRANZI, Edoardo, 1400 Cheseaux-Noréaz (CH)
(74) Mandataire: ICB SA

(56) Documents cités:
- EP-A1- 3 287 922
- EP-A1- 3 413 226
- US-A1- 2016 004 224
- US-A1- 2019 095 602
- US-B1- 10 075 846

## Description

### Domaine technique

La présente invention concerne un procédé de sécurisation d'accès à une montre et un système mettant en œuvre un tel procédé.

L'invention concerne également une montre comprenant un tel système ainsi qu'un programme d'ordinateur.

### Art antérieur

Une montre comprend un ensemble de fonctions qui peut être utilisé par le porteur. De telles fonctions peuvent concerner en plus du réglage de l'heure ou de la date, une utilisation de données confidentielles ou privées propres au porteur et utiles pour accéder à des services personnalisés. Ces données sont par exemple des clés, certificats, codes d'authentification, mots de passe et codes personnels qui permettent de réaliser une connexion sécurisée de la montre à un réseau privé d'une entreprise, une authentification auprès de serveurs sécurisés comme un serveur bancaire, ou une messagerie sécurisée pour l'envoi et la réception de courriels signés et/ou chiffrés. Dès lors, on comprend alors qu'il est important de pouvoir sécuriser l'accès à l'utilisation des fonctions d'une telle montre.

Pour ce faire, on connait dans l'état de la technique des procédés prévoyant de sécuriser l'accès à une montre et en particulier aux fonctions de cette montre, en renforçant les critères d'authentification autorisant cet accès par exemple en mettant en œuvre des étapes supplémentaires d'authentification, comme par exemple dans le document US 2019/095602 A1, lequel décrit une authentification en deux-étapes du porteur d'une montre, l'une des authentification correspondant à la mesure de la texture de la peau de l'utilisateur.

Toutefois un des inconvénients majeurs de tels procédés est lié au fait qu'une fois que le porteur de la montre est authentifié il est alors possible à n'importe quel individu d'avoir accès aux fonctions de la montre notamment dans le cas où cette dernière a été volée.

On comprend qu'il existe un besoin de trouver une solution alternative, notamment qui ne présente pas les inconvénients de l'art antérieur.

### Résumé de l'invention

Un but de la présente invention est par conséquent de proposer un procédé de sécurisation d'accès à une montre qui soit fiable et robuste.

Un tel procédé a pour avantage de s'assurer de l'identité du porteur de la montre de manière automatique, transparente et non intrusive pour le porteur.

Dans ce dessein, l'invention concerne un procédé de sécurisation d'accès à une montre selon la revendication indépendante 1.

D'autres modes d'exécution préférés sont présentés dans les revendications dépendantes.

L'invention concerne aussi un système de sécurisation d'accès à une montre mettant en œuvre ce procédé, le système comprenant les éléments suivants reliés entre eux : une unité de traitement, un capteur biométrique, une interface de saisie et une interface de diffusion d'une information visuelle.

Avantageusement, le capteur biométrique est capteur biométrique multispectral de peau.

L'invention concerne également une montre, notamment une montre mécanique connectée, comportant un tel système.

L'invention concerne aussi un programme d'ordinateur comprenant des instructions de code de programme pour l'exécution des étapes du procédé lorsque ledit programme est exécuté par une unité de traitement.

### Brève description des figures

D'autres particularités et avantages ressortiront clairement de la description qui en est faite ci-après, à titre indicatif et nullement limitatif, en référence aux figures annexées, dans lesquelles :
- la figure 1 est une représentation schématique d'une montre comprenant un système de sécurisation d'accès à une montre, selon un mode de réalisation de l'invention, et
- la figure 2 est un logigramme relatif à un procédé de sécurisation d'accès à la montre, selon le mode de réalisation de l'invention.

### Description détaillée de l'invention

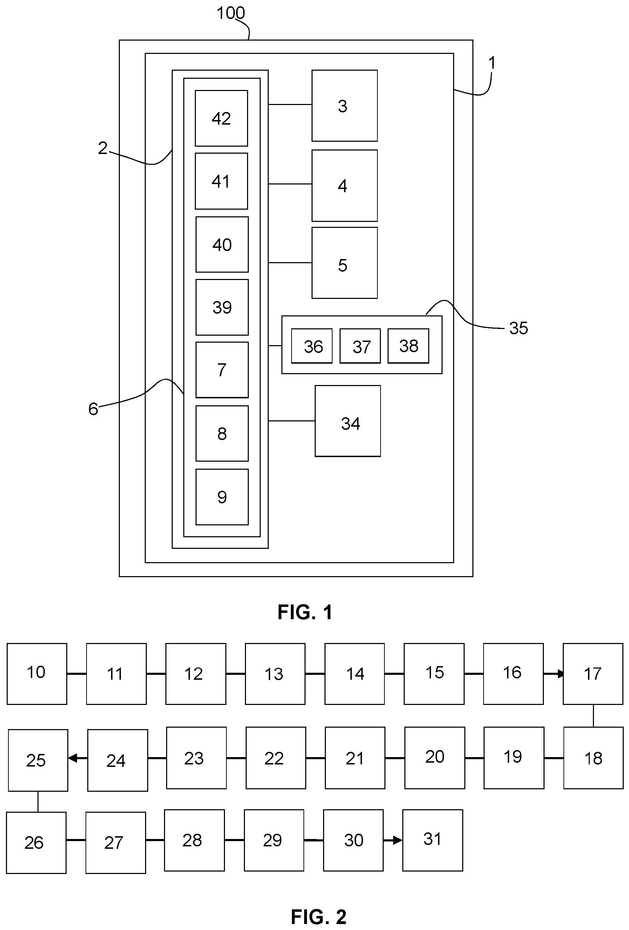

Sur la figure 1 est représenté une montre 100 comprenant un système de sécurisation d'accès à une montre 100 et en particulier à l'utilisation de fonctions de cette montre 100. Un tel système 1 est compris dans la montre 100 qui est de préférence une montre 100 mécanique connecté à affichage hybride. Dans ce contexte, ce dispositif électronique 100 comprend un corps tel que la boîte de montre, et un élément d'attache tel qu'un bracelet permettant de fixer ce corps par exemple au poignet du porteur. Ce système 1 comprend plus précisément de manière non limitative et/ou non exhaustive :
- une unité de traitement 2 comportant des ressources matérielles et logicielles en particulier au moins un processeur coopérant avec des éléments de mémoire 6;
- une interface de diffusion d'une information visuelle 3 telle qu'un cadran d'affichage hybride pourvu d'une première composante d'affichage analogique et d'une deuxième composante d'affichage numérique et/ou alphanumérique ;
- une interface de diffusion d'une information sonore 4 telle qu'un hautparleur ;
- une interface de communication sans fil 5 (par exemple cellulaire, WLAN Bluetooth, etc.) ;
- une interface de saisie 34 tel qu'un clavier ou encore une interface tactile comprise par exemple dans l'interface de diffusion d'une information visuelle 3, et
- un capteur biométrique 35 notamment dans ce mode de réalisation un capteur multispectral de peau, ledit capteur 35 comprenant au moins un capteur photographique 36, au moins une source d'éclairage multispectral 37 et au moins un capteur d'image thermique 38, la source d'éclairage 37 pouvant émettre un rayonnement lumineux dans des longueurs d'ondes comprises entre 300 et 1100 nm, de plus cette source d'éclairage 37 peut être du type laser.

Dans ce système 1, l'unité de traitement 2 est reliée entre autres aux interfaces de diffusion d'une information visuelle et sonore 3, 4, à l'interface de saisie 34 ainsi qu'à l'interface de communication sans fil 5 et au capteur biométrique 35. On notera en complément que le capteur biométrique 35 est agencé dans le corps du dispositif électronique 100 et/ou dans l'élément d'attache.

Ce système 1 implémenté dans le dispositif électronique 100 est apte à assurer le contrôle de l'identité du porteur authentifié de la montre de manière discrète c'est-à-dire sans intervention/interaction directe du porteur avec cette montre 100, afin qu'il puisse utiliser les fonctions de la montre 100 tout le temps qu'il la porte et ce, sans avoir à s'authentifier de nouveau. L'identification du porteur est alors effectuée de manière transparente et discrète et ce, à partir d'au moins un élément d'information biométrique. Dans le cadre du présent mode de réalisation, l'élément d'information biométrique est compris dans une portion de peau du porteur et peut être un réseau vasculaire de la peau ou encore une texture de cette peau. Cette peau du porteur qui recouvre son corps a une particularité, moins évidente à envisager par l'homme de l'art car non visualisable naturellement par l'œil humain, liée aux caractéristiques d'absorption et de réflexion à différentes longueurs d'onde (spectre) des composantes de la peau, situées à différentes profondeurs. Dans un modèle simplifié, la peau est constituée d'une couche nommée « épiderme », semi transparente et située en surface puis, sous l'épiderme, d'une couche nommée le « derme » et comprenant, entre autres, les vaisseaux sanguins (ou réseau vasculaire) dans lesquels l'hémoglobine est fortement réfléchissante aux longueurs d'onde élevées proches du rouge en étant comprises par exemple entre 760 et 930 nm ce qui permet ici de révéler ou mettre en évidence le réseau vasculaire de la peau du porteur. En d'autres termes, le spectre d'absorption lumineux des composantes de l'épiderme et du derme constituant la peau n'étant pas uniforme selon les longueurs d'ondes électromagnétiques, l'apparence et la couleur de la peau résultent d'une combinaison complexe de ces phénomènes. Ainsi, lorsqu'il s'agit de mettre en évidence ou de révéler un élément d'information biométrique comme la texture de la peau de ce porteur, texture essentiellement formée de crevasses ou cavités, l'éclairage de la peau peut être alors assuré par une source d"éclairage restreinte aux longueurs d'onde aux alentours du rouge qui tend à faire disparaître le phénomène d'ombres du fond des crevasses. En effet, il se produit un effet de rétro projection par réflexion sur le derme et à travers l'épiderme de ces longueurs d'onde proches du rouge, alors que l'éclairage de la peau par une source de spectre colorimétrique éloigné du rouge, typiquement la bande de longueurs d'onde située entre le violet (400 nm) et jusqu'au jaune-orangé (600 nm), permet au contraire de mettre fortement en contraste ces crevasses de la peau par l'apparition d'ombres au fond de ces crevasses. On notera que l'identification d'un élément d'information biométrique compris dans la peau peut être améliorée par l'utilisation du capteur d'image thermique 38 de préférence sans éclairage. A titre d'exemple, pour la mise en évidence de la texture de la peau notamment lorsque la portion de la peau concernée de ce porteur est pourvue de poils, l'utilisation du capteur d'image thermique 38 permet de révéler les crevasses de cette texture de la peau qui sont généralement plus chaudes que la peau environnante et les poils plus froids que cette peau environnante. Ainsi dans cette configuration les poils peuvent être distingués thermiquement des crevasses de la texture de la peau du fait de cette différence entre leur température respective.

On notera que la capture d'images thermiques peut être réalisée sous un éclairage dans une longueur d'onde donnée selon l'élément d'information biométrique qu'il convient de mettre en évidence ou de révéler.

On comprend donc, selon le principe de l'invention, que l'identification périodique du porteur est réalisée à partir d'au moins un élément d'information biométrique compris dans des images d'une portion de peau de ce porteur qui peut être éclairée le cas échéant selon différentes longueur d'onde afin de capturer des images comprenant l'élément d'information biométrique recherché. Ainsi, cet élément d'information biométrique, compris dans ces images, peut être mis en évidence par l'éclairage effectué dans différentes longueurs d'onde ou sans éclairage par exemple lorsqu'il s'agit de réaliser une capture d'images thermiques.

Dans ce système 1, les éléments de mémoire 6 de l'unité de traitement 2 comprennent des données relatives à un élément d'identification numérique de référence préalablement défini/généré. Ces éléments de mémoire 6 comportent également des algorithmes de traitement numérique 39 d'images permettant de caractériser au moins un élément d'information biométrique relatif à la peau du porteur et qui est compris dans les images relatives à la portion de peau du porteur. Ces éléments de mémoire 6 comportent aussi des algorithmes de génération 40 de l'élément d'identification numérique de référence mais aussi de l'élément d'identification numérique qui est généré périodiquement dans le cadre du contrôle de l'identité du porteur.

Ces éléments de mémoire 6 de l'unité de traitement 2 comprennent aussi au moins une représentation graphique 41 prévue pour participer au processus d'authentification du porteur afin que ce dernier ait accès aux fonctions de la montre 100. Cette représentation graphique 41 peut par exemple être une image comprenant au moins un objet. A titre d'exemple, cette image définit une scène comprenant une pluralité d'objets tels que des habitations, des véhicules et/ou un astre comme la lune, etc... On comprend bien évidemment que cette image peut définir d'autres types de scène comportant au moins un objet. Ces éléments de mémoire 6 comportent également des données relatives à une séquence de référence 42 comprenant des portions d'identification de référence de cette représentation graphique 41, lesdites portions ayant été préalablement sélectionnées par le porteur de la montre lors de la configuration d'un processus d'authentification.

Un tel système 1 de la montre 100 est apte à mettre en œuvre un procédé de sécurisation d'accès à la montre 100 et en particulier à l'utilisation de fonctions de cette montre 100, représenté sur la figure 2. Un tel procédé vise à s'assurer de manière discrète c'est-à-dire de manière non intrusive et automatique de l'identité d'un porteur authentifié afin qu'il puisse utiliser les fonctions de la montre 100 tout le temps qu'il la porte sans avoir à s'authentifier de nouveau. Les fonctions de la montre 100 peuvent concerner le réglage de l'heure, de la date ou encore l'utilisation d'un chronomètre, d'un système de navigation, un podomètre, d'un traceur d'activité, d'une messagerie, un accès à des données confidentielles ou privées propres au porteur et utiles pour accéder à des services personnalisés, etc...

Ce procédé comprend une étape d'authentification 10 du porteur de la montre 100 en vue d'autoriser un accès aux fonctions de cette montre 100 à partir d'une interaction entre le porteur de la montre et une représentation graphique comprise dans ladite montre 100 plus particulièrement une représentation graphique affichée sur/dans l'interface de diffusion d'une information visuelle 3 de ladite montre 100. Cette étape 10 permet au porteur d'apporter la preuve de son identité. Plus précisément, cette étape 10 comprend une sous-étape de présentation 11 d'une représentation graphique 41 sur l'interface de diffusion d'une information visuelle 3 de ladite montre 100. Cette sous-étape 11 comporte une phase de génération 12 de l'affichage, sur/dans l'interface de diffusion d'une information visuelle 3, de la représentation graphique 41 prévue pour la mise en œuvre de cette authentification. Cette phase 12 peut comprendre une sous-phase de sélection par le porteur parmi un échantillon d'au moins deux représentations graphiques 41 affichées sur l'interface de diffusion d'une information visuelle 3, de la représentation graphique 41 prévue pour la mise en œuvre de cette authentification. On notera que le porteur est le seul à connaitre la représentation graphique 41 qu'il a choisi lors de la configuration du processus d'authentification d'accès aux fonctions de la montre 100.

Cette sous-étape de présentation 11 comprend ensuite une phase de déclenchement 13 d'un compte à rebours dès lors que la phase de génération 12 est réalisée. Autrement dit, le compte à rebours préconfigurable, est déclenché une fois la représentation graphique 41 est présentée sur l'interface de diffusion 3. Une telle phase 13 participe à partir d'un intervalle de temps limité défini par ce compte à rebours, à décompter le temps estimé nécessaire à la saisie de la séquence de portions d'identification de la représentation graphique 41 affichée sur/dans sur l'interface de diffusion 3.

Par la suite, l'étape d'authentification 10 comprend une sous-étape de sélection 14 dans l'intervalle de temps limité d'une séquence d'au moins deux portions d'identification de ladite représentation graphique 41 visant à identifier ledit porteur, ladite séquence correspondant à un code d'identification du porteur. De telles portions d'identification ne sont pas directement visibles dans la représentation graphique 41 présentée sur/dans l'interface de diffusion 3. Dans ces conditions, la sous-étape de sélection 14 comprend une phase de visualisation 15 d'au moins une desdites portions d'identification de la séquence dans ladite représentation graphique 41. Cette phase de visualisation 15 comprend une sous-phase de sélection d'au moins une zone d'intérêt de la représentation graphique 41 susceptible de comprendre ladite au moins une portion d'identification. Lors de cette sous-phase, le porteur sélectionne par exemple une première zone d'intérêt ou une deuxième zone d'intérêt en effectuant un agrandissement de cette première zone ou cette deuxième zone à partir de l'interface de saisie 35. Une fois cette première ou deuxième zone d'intérêt sélectionnée les portions d'identification deviennent alors visibles. Dans cette configuration, chaque portion d'identification utile pour la réalisation/constitution de la séquence peut être sélectionnée à partir de l'interface de saisie 35.

Il convient de remarquer que la séquence comprend un nombre ordonné de portions d'identification et que la zone d'intérêt sélectionnée peut comprendre par exemple trois portions d'identification dont seulement deux sont ordonnées successivement l'une après l'autre dans la séquence. Dans ce contexte, la portion d'identification restante requiert pour faire partie de la séquence, la sélection d'une portion d'identification comprise dans une autre zone d'intérêt de la représentation graphique 41.

Ensuite, l'étape d'authentification 10 comprend une sous-étape de validation 16 de la séquence sélectionnée. Cette sous-étape de validation 16 comprend une phase de contrôle 17 que la sélection de la séquence de portions d'identification a été réalisée dans l'intervalle de temps limité défini par le compte à rebours. Dans la mesure où cette sélection a été réalisée dans cet intervalle de temps limité, la sous-étape de validation 16 comprend alors une phase de comparaison 18, mise en œuvre par l'unité de traitement 2, entre ladite séquence sélectionnée et la séquence de référence 42. Cette phase de comparaison 18 comprend une sous-phase d'interdiction d'accès aux fonctions de la montre 100 si ladite séquence est sensiblement différente ou différente de la séquence de référence 42. A l'inverse, cette phase de comparaison 18 comprend une sous-phase d'autorisation d'accès aux fonctions de la montre 100 si ladite séquence est sensiblement similaire ou similaire à la séquence de référence 42.

Dans la mesure où cette sélection n'a pas été réalisée dans l'intervalle de temps limité, la sous-étape de validation 16 comprend une phase de renouvellement 19 des sous-étapes de présentation 11 et de sélection 14. Si par la suite, la sélection de la séquence n'a de nouveau pas été réalisée dans l'intervalle de temps limité, la sous-étape de validation 11 prévoit alors une sous-étape de blocage/verrouillage d'accès aux fonctions de la montre 100. Dans ce contexte, une procédure particulière de déverrouillage/déblocage est alors nécessaire pour rétablir l'accès à ladite montre.

Ce procédé comprend ensuite une étape de contrôle 20 périodique de l'identité du porteur de la montre par une vérification de la validité d'un élément d'identification numérique déterminé à partir d'au moins un élément d'information biométrique du porteur de ladite montre en vue de conserver/supprimer l'autorisation d'accès audites fonctions. Un telle étape est aussi appelée étape de contrôle discret périodique. Dans le cadre du présent mode de réalisation, l'élément d'information biométrique est compris dans une portion de peau du porteur. Durant cette étape 20, la période attaché au contrôle est régulière ou irrégulière et peut être configurée automatiquement par l'unité de traitement 2 ou définie par le porteur. A titre d'exemple, cette période peut être de quelques secondes ou quelques minutes. Une telle étape de contrôle 20 permet de vérifier à l'issue de chaque période que le porteur de la montre est toujours le même par le contrôle de son identité « biométrique » à partir d'un élément d'identification numérique établi en fonction d'au moins un élément d'information biométrique compris dans la peau de ce porteur.

Cette étape de contrôle 20 comprend ensuite une sous-étape d'acquisition 21 par le capteur 35 d'une pluralité d'images d'une portion de peau du porteur, ladite peau étant agencée de manière adjacente audit capteur, lesdites images comprenant ledit au moins un élément d'information biométrique compris dans cette portion de peau. Cette sous-étape 21 comprend une phase d'éclairage 22 de la portion de peau selon différentes longueurs d'onde. Plus précisément, lors de cette phase 22, l'unité de traitement 2 pilote le capteur biométrique multispectral 35 et en particulier la source d'éclairage 37 de manière à ce que cette dernière émette un rayonnement lumineux en direction de la portion de peau selon une longueur d'onde précise adaptée à la mise en évidence ou à révéler ledit au moins un élément d'information biométrique spécifique de la peau, ici recherché dans le cadre du contrôle de l'identité du porteur, et qui est compris dans cette portion de la peau du porteur. Une fois l'éclairage configuré, la sous-étape d'acquisition 21 comprend une phase de capture 23 d'images de cette portion de peau éclairée à au moins une longueur d'onde susceptible de mettre en évidence ou de révéler ledit au moins un élément d'information biométrique. Lors de cette phase 23, l'unité de traitement 2 pilote le capteur biométrique multispectral 35 de peau et en particulier le capteur photographique 36 de manière synchrone avec l'activation/désactivation de la source d'éclairage 37 et ce, afin de réaliser une capture d'au moins une image relative à la portion de peau éclairée pour au moins une longueur d'onde.

Cette sous-étape d'acquisition 21 peut comprendre aussi une phase de capture 24 d'au moins une image thermique de la portion de peau. Une telle phase 24 est réalisée de préférence sans éclairage mais dans d'autres alternatives un éclairage de la portion peut être effectué dans au moins une longueur d'onde donnée, cela dépendant évidemment de l'élément d'information biométrique qu'il convient de mettre en évidence ou de révéler. Cette phase 24 peut être réalisée avant ou après les phases d'éclairage 22 et de capture 23 d'images.

L'étape de contrôle 20 comprend ensuite une sous-étape de génération 25 de l'élément d'identification numérique à partir dudit au moins un élément d'information biométrique compris dans les images acquises de la portion de peau. Une telle sous-étape 25 comprend une phase de caractérisation 26 dudit élément d'information biométrique compris dans les images relatives à ladite portion de peau. Lors de cette phase 26, l'unité de traitement 2 met en œuvre des algorithmes de traitement 39 des images acquises visant à identifier/détecter dans chacune d'entre elles ledit au moins un élément d'information biométrique qu'elles comprennent. Ainsi que nous l'avons déjà évoqué précédemment, il peut s'agir d'éléments d'information relatifs par exemple à la texture de la peau ou au réseau vasculaire compris dans cette portion de peau du porteur. La mise en œuvre de ces algorithmes 39, 40 par l'unité de traitement 2 peut à titre d'exemple prévoir un processus de découpe en segments de ces images. On comprend ici que chaque image acquise donne une vue globale de la portion de la peau du porteur, et comporte alors des zones de pertinence variables pour l'identification dudit au moins un élément d'information biométrique. Un tel processus de découpe participe à extraire les segments à traiter et à éliminer les parties à ne pas traiter dans ces images. Ces algorithmes 39 peuvent ensuite prévoir un indexage de ces segments d'image comprenant des caractéristiques relatives audit au moins un élément d'information biométrique particulier à identifier, par zones de localisation dans la portion de peau et ce, afin de pouvoir affecter à chaque zone le traitement adéquat vis-à-vis de la typologie morphologique de la caractéristique de cette zone géographique de la portion. Dans ce contexte, ces algorithmes 39 traitent chaque segment de ces images en mettant en évidence les informations portées par les pixels de chacune de ces images par la réalisation d'opérations d'analyse d'image de type traitements, transformations et détections. Par la suite, ces algorithmes 39 effectuent des opérations de filtrage et d'extraction de caractéristiques ou de vectorisation, afin de convertir les données images relatives audit au moins un élément d'information biométrique identifié et extrait, en des données paramétriques, typiquement des valeurs numériques relatives exprimées par exemple en indice ou en pourcentage.

On comprend ici que l'acquisition de plusieurs images représentant la même portion de peau, participe à améliorer la précision et l'efficacité de cette phase de caractérisation 26.

Par la suite, la sous-étape de génération 25 comprend une phase de conception 27 de l'élément d'identification numérique à partir de la caractérisation dudit au moins un élément d'information biométrique. Lors de cette phase 27, l'unité de traitement 2 met en œuvre des algorithmes de génération 40 d'un tel élément d'identification numérique spécifiquement prévus pour le traitement des données paramétriques obtenues lors de la phase de caractérisation 26, lesquelles données paramétriques étant relatives à l'élément d'information biométrique.

Ensuite, l'étape de contrôle 20 comprend une sous-étape de validation 20 de l'élément d'identification numérique généré en prévision d'un contrôle de l'identité du porteur. Cette sous-étape de validation 28 comprend une phase de comparaison 29, mise en œuvre par l'unité de traitement 2, entre l'élément d'identification numérique généré et l'élément d'identification numérique de référence. Dans ce procédé, l'élément d'identification numérique de référence peut être créé, dès lors que le porteur a été dûment authentifié et que son identité est certaine et ce, lors d'une étape de définition 11 de cet élément d'identification numérique de référence prévoyant des sous-étapes similaires aux sous-étapes de d'acquisition 21 et de génération 25 mises en œuvre durant l'étape de contrôle 20. Dans ce procédé, une fois que le porteur de la montre 100 est authentifié, l'unité de traitement 2 met en œuvre cette étape de définition 11 et effectue ensuite un archivage de l'élément d'identification numérique de référence obtenu dans les éléments de mémoire 6 de l'unité de traitement 2. Cet élément d'identification numérique de référence peut donc être déterminé automatiquement par l'unité de traitement 2 ou configuré par le porteur durant un processus de réglage visant à guider le porteur dans la définition de cet élément d'identification numérique de référence.

Cette phase de comparaison 29 comprend une sous-phase de suppression 30 de l'autorisation d'accès audites fonctions de la montre 100 si l'élément d'identification numérique généré est sensiblement différent ou différent de l'élément d'identification numérique de référence. Dans ce cas de figure, l'accès aux fonctions de la montre 100 est alors supprimé car le porteur et propriétaire de la montre 100 peut ne plus être en sa possession. Dès lors dans ce contexte pour utiliser de nouveau les fonctions de la montre 100, il est nécessaire de s'authentifier.

La phase de comparaison 29 comprend aussi une sous-phase de conservation 31 de l'autorisation d'accès audites fonctions de la montre 100 si l'élément d'identification numérique généré est sensiblement similaire ou similaire à l'élément d'identification numérique de référence. Dans ce cas, l'unité de contrôle 2 exécute de nouveau, selon la période déterminée, les sous-étapes d'acquisition 21 et de génération 25 de l''étape de contrôle 20 afin de réaliser une autre fois la phase de comparaison 29.

Ainsi, l'invention permet de contrôler en permanence de manière automatique et non-intrusive l'identité du porteur de la montre notamment dès qu'il est authentifié.

L'invention porte aussi sur un programme d'ordinateur comprenant des instructions de code de programme pour l'exécution des étapes 10 à 31 de ce procédé lorsque ledit programme est exécuté par l'unité de traitement 2 de la montre 100.

## Revendications

1. Procédé de sécurisation d'accès à une montre (100) comportant les étapes suivantes :
- authentification (10) du porteur de la montre (100) en vue d'autoriser un accès aux fonctions de cette montre (100) à partir d'une interaction entre le porteur de la montre et une représentation graphique comprise dans ladite montre (100), et
- contrôle (20) périodique de l'identité du porteur de la montre par une vérification de la validité d'un élément d'identification numérique déterminé à partir d'au moins un élément d'information biométrique du porteur de ladite montre en vue de conserver/supprimer l'autorisation d'accès audites fonctions, ledit élément d'information biométrique étant une texture de la peau de ce porteur, texture essentiellement formée de crevasses ou cavité, ladite étape (20) utilisant un capteur d'image thermique (38) pour la mise en évidence de la texture de la peau lorsque la portion de la peau concernée de ce porteur est pourvue de poils afin de révéler les crevasses de cette texture de la peau, ladite étape (20) comprenant une sous-étape d'acquisition (21) par au moins un capteur biométrique multispectral de peau (35) compris dans la montre (100), d'une pluralité d'images d'une portion de peau du porteur adjacente audit capteur (35), lesdites images comprenant ledit au moins un élément d'information biométrique compris dans cette portion de peau.

2. Procédé selon la revendication précédente, **caractérisé en ce que** l'étape d'authentification (10) comprend une sous-étape de présentation (11) d'une représentation graphique (41) sur une interface de diffusion d'une information visuelle (3) de ladite montre (100).

3. Procédé selon la revendication précédente **caractérisé en ce que**, l'étape d'authentification (10) comprend une sous-étape de sélection (14) dans un intervalle de temps limité d'une séquence d'au moins deux portions d'identification comprises dans ladite représentation graphique (41) visant à identifier ledit porteur, ladite séquence correspondant à un code d'identification du porteur.

4. Procédé selon la revendication précédente **caractérisé en ce que**, l'étape d'authentification (10) comprend une sous-étape validation (16) de la séquence sélectionnée.

5. Procédé selon l'une quelconque des revendications précédentes, **caractérisé en ce que** l'étape de contrôle (20) comprend une sous-étape de génération (25) d'un élément d'identification numérique à partir dudit au moins un élément d'information biométrique.

6. Procédé selon l'une quelconque des revendications précédentes, **caractérisé en ce que** l'étape de contrôle (20) comprend une sous-étape de validation (28) d'un élément d'identification numérique généré en prévision du contrôle de l'identité du porteur.

7. Procédé selon la revendication précédente, **caractérisé en ce que** la sous-étape de validation (28) comprend une phase de comparaison (29) comportant une sous-phase de conservation (30) de l'autorisation d'accès audites fonctions de la montre si l'élément d'identification numérique généré est sensiblement similaire ou similaire à un élément d'identification numérique de référence.

8. Procédé selon l'une quelconque des revendications 1 à 7, **caractérisé en ce que** la sous-étape d'acquisition (21) comprend une phase d'éclairage (22) de la portion de peau selon différentes longueurs d'onde.

9. Procédé selon l'une quelconque des revendications 1 à 8, **caractérisé en ce que** la sous-étape d'acquisition (21) comprend une phase de capture (23) d'images de la portion de peau éclairée à différentes longueurs d'onde.

10. Procédé selon l'une quelconque des revendications 5 à 9, **caractérisé en ce que** la sous-étape de génération (25) comprend une phase de caractérisation (26) dudit au moins un élément d'information biométrique compris dans les images acquises relatives à ladite portion de peau.

11. Procédé selon l'une quelconque des revendications 5 à 10, **caractérisé en ce que** la sous-étape de génération (25) comprend une phase de conception (27) de l'élément d'identification numérique à partir de la caractérisation dudit élément d'information biométrique.

12. Procédé selon l'une quelconque des revendications 1 à 11, **caractérisé en ce que** l'élément d'information biométrique est relatif à un réseau vasculaire ou à une texture de cette peau.

13. Système de sécurisation d'accès à une montre (100) mettant en œuvre le procédé selon l'une quelconque des revendications précédentes, le système (1) comprenant les éléments suivants reliés entre eux : une unité de traitement (2), un capteur biométrique (35), un capteur d'image thermique (38), une interface de saisie (34) et une interface de diffusion d'une information visuelle (3).

14. Système selon la revendication précédente, **caractérisé en ce que** le capteur biométrique (34) est capteur biométrique multispectral de peau.

15. Montre (100), notamment une montre (100) mécanique connectée, comportant un système (1) selon l'une quelconque des revendications 13 et 14.

16. Programme d'ordinateur comprenant des instructions de code de programme pour l'exécution des étapes (10 à 31) du procédé selon l'une quelconque des revendications 1 à 12 lorsque ledit programme est exécuté par l'unité de traitement (2) du système selon la revendication 13.

## Patentansprüche

1. Verfahren zur Sicherung des Zugriffs auf eine Uhr (100), umfassend die folgenden Schritte:
- Authentifizierung (10) des Trägers der Uhr (100), um den Zugriff auf die Funktionen der Uhr (100) durch eine Interaktion zwischen dem Träger und einer grafischen Darstellung, die in der Uhr (100) enthalten ist, zu autorisieren, und
- periodische Überprüfung (20) der Identität des Uhrträgers durch Validierung eines digitalen Identifizierungselements, das auf mindestens einem biometrischen Informationselement des Trägers der Uhr basiert, um die Zugriffsberechtigung auf die genannten Funktionen beizubehalten oder zu widerrufen, wobei das biometrische Informationselement die Hauttextur des Trägers umfasst, welche im Wesentlichen durch Hautrillen oder - vertiefungen gebildet ist, wobei dieser Schritt (20) einen thermischen Bildsensor (38) nutzt, um die Hauttextur sichtbar zu machen, insbesondere wenn der entsprechende Hautbereich des Trägers behaart ist, um die Hautrillen zu detektieren, wobei dieser Schritt (20) einen Unterschritt (21) zur Erfassung durch mindestens einen multispektralen Haut-Biosensor (35), der in der Uhr (100) integriert ist, beinhaltet, wobei mehrere Bilder eines an den Sensor (35) angrenzenden Hautbereichs des Trägers aufgenommen werden, wobei diese Bilder mindestens ein in diesem Hautbereich enthaltenes biometrisches Informationselement umfassen.

2. Verfahren nach dem vorhergehenden Anspruch, **dadurch gekennzeichnet, dass** der Authentifizierungsschritt (10) einen Unterschritt (11) zur Anzeige einer grafischen Darstellung (41) auf einer Anzeigeoberfläche (3) der Uhr (100) umfasst.

3. Verfahren nach dem vorhergehenden Anspruch, **dadurch gekennzeichnet, dass** der Authentifizierungsschritt (10) einen Unterschritt (14) zur Auswahl einer Sequenz aus mindestens zwei Identifikationsbereichen innerhalb der grafischen Darstellung (41) innerhalb eines begrenzten Zeitintervalls umfasst, wobei diese Sequenz zur Identifizierung des Trägers dient und einem Identifizierungscode des Trägers entspricht.

4. Verfahren nach dem vorhergehenden Anspruch, **dadurch gekennzeichnet, dass** der Authentifizierungsschritt (10) einen Unterschritt (16) zur Validierung der ausgewählten Sequenz umfasst.

5. Verfahren nach einem der vorhergehenden Ansprüche, **dadurch gekennzeichnet, dass** der Kontrollschritt (20) einen Unterschritt (25) zur Erzeugung eines digitalen Identifizierungselements aus dem mindestens einen biometrischen Informationselement umfasst.

6. Verfahren nach einem der vorhergehenden Ansprüche, **dadurch gekennzeichnet, dass** der Kontrollschritt (20) einen Unterschritt (28) zur Validierung eines digitalen Identifizierungselements umfasst, das im Hinblick auf die Identitätskontrolle des Trägers zuvor generiert wurde.

7. Verfahren nach dem vorhergehenden Anspruch, **dadurch gekennzeichnet, dass** der Validierungs-Unterschritt (28) eine Vergleichsphase (29) umfasst, die eine Unterphase (30) zur Aufrechterhaltung der Zugriffsberechtigung auf die genannten Funktionen der Uhr vorsieht, wenn das generierte digitale Identifizierungselement dem digitalen Referenz-Identifizierungselement im Wesentlichen ähnlich oder ähnlich ist.

8. Verfahren nach einem der Ansprüche 1 bis 7, **dadurch gekennzeichnet, dass** der Erfassungs-Unterschritt (21) eine Beleuchtungsphase (22) des Hautbereichs mit verschiedenen Wellenlängen umfasst.

9. Verfahren nach einem der Ansprüche 1 bis 8, **dadurch gekennzeichnet, dass** der Erfassungs-Unterschritt (21) eine Aufnahmephase (23) von Bildern des bei unterschiedlichen Wellenlängen beleuchteten Hautbereichs umfasst.

10. Verfahren nach einem der Ansprüche 5 bis 9, **dadurch gekennzeichnet, dass** der Generierungs-Unterschritt (25) eine Charakterisierungsphase (26) des mindestens einen biometrischen Informationselements umfasst, das in den aufgenommenen Bildern des betreffenden Hautbereichs enthalten ist.

11. Verfahren nach einem der Ansprüche 5 bis 10, **dadurch gekennzeichnet, dass** der Generierungs-Unterschritt (25) eine Konstruktionsphase (27) zur Erstellung des digitalen Identifizierungselements auf Grundlage der Charakterisierung des genannten biometrischen Informationselements umfasst.

12. Verfahren nach einem der Ansprüche 1 bis 11, **dadurch gekennzeichnet, dass** sich das biometrische Informationselement auf ein Gefäßnetzwerk oder auf eine Textur des betreffenden Hautbereichs bezieht.

13. System zur Sicherung des Zugriffs auf eine Uhr (100), welches das Verfahren nach einem der vorhergehenden Ansprüche implementiert, wobei das System (1) folgende miteinander verbundene Komponenten umfasst: eine Verarbeitungseinheit (2), einen biometrischen Sensor (35), einen thermischen Bildsensor (38), eine Eingabeschnittstelle (34) und eine Anzeigeoberfläche (3) zur Ausgabe visueller Informationen.

14. System nach dem vorhergehenden Anspruch, **dadurch gekennzeichnet, dass** der biometrische Sensor (34) ein multispektraler Haut-Biosensor ist.

15. Uhr (100), insbesondere eine vernetzte mechanische Uhr (100), umfassend ein System (1) gemäß einem der Ansprüche 13 oder 14.

16. Computerprogramm mit Programmcode-Anweisungen zur Ausführung der Schritte (10 bis 31) des Verfahrens gemäß einem der Ansprüche 1 bis 12, wenn das Programm von der Verarbeitungseinheit (2) des Systems gemäß Anspruch 13 ausgeführt wird.

## Claims

1. Method for securing access to a watch (100) including the following steps:
- authentication (10) of the wearer of the watch (100) with a view to authorising access to the functions of this watch (100) based on an interaction between the wearer of the watch and a graphic representation comprised in said watch (100), and
- periodic checking (20) of the identity of the wearer of the watch through a verification of the validity of a digital data item determined based on at least one biometric data item of the wearer of said watch with a view to retaining/removing the authorisation for access to said functions, said biometric data item being a skin texture of this wearer, a texture essentially formed of cracks and cavities, said checking step (20) using a thermal image sensor (38) for the detection of the skin texture when the portion of this wearer's skin concerned is endowed with hairs in order to reveal the cracks of this skin texture, said checking step (20) comprising an acquisition sub-step (21) by at least one multispectral biometric skin sensor (35) comprised in the watch (100), of a plurality of images of a portion of the wearer's skin adjacent to said sensor (35), said images comprising said at least one biometric data item comprised in this skin portion.

2. Method according to the preceding claim, **characterised in that** the authentication step (10) comprises a presentation sub-step (11) of a graphic representation (41) on a visual data broadcasting interface (3) of said watch (100).

3. Method according to the preceding claim **characterised in that**, the authentication step (10) comprises a selection sub-step (14) within a limited time interval of a sequence of at least two identification portions of said graphic representation (41) aiming to identify said wearer, said sequence corresponding to an identification code of the wearer.

4. Method according to the preceding claim **characterised in that** the authentication step (10) comprises a validation sub-step (16) of the selected sequence.

5. Method according to any one of the preceding claims, **characterised in that** the checking step (20) comprises a generation sub-step (25) of a digital identification item based on said at least one biometric data item.

6. Method according to any one of the preceding claims, **characterised in that** the checking step (20) comprises a validation sub-step (28) of the digital identification item generated in anticipation of the wearer identity check.

7. Method according to the preceding claims, **characterised in that** the validation sub-step (28) comprises a comparison phase (29) including an access authorisation retention sub-phase (30) to said functions of the watch if the digital identification item is substantially similar or similar to a reference digital identification item.

8. Method according to any one of claims 1 to 7, **characterised in that** the acquisition sub-step (21) comprises an illumination phase (22) of the skin portion along different wavelengths.

9. Method according to any one of claims 1 to 8, **characterised in that** the acquisition sub-step (21) comprises a capture phase (23) of images of the skin portion illuminated at different wavelengths.

10. Method according to any one of claims 5 to 9, **characterised in that** the generation sub-step (25) comprises a characterisation phase (26) of said at least one biometric data item comprised in the acquired images relative to said skin portion.

11. Method according to any one of the claims 5 to 10, **characterised in that** the generation step (25) comprises a design sub-step (27) of the digital identification item based on the characterisation of said biometric data item.

12. Method according to any one of claims 1 to 11, **characterised in that** the biometric data item relates to a vascular network or to a texture of this skin.

13. System for securing access to a watch (100) implementing the method according to any one of the preceding claims, the system (1) comprising the following interconnected elements: a processing unit (2), a biometric sensor (35), a thermal image sensor (38), an input interface (34) and a visual data broadcasting interface (3).

14. System according to the preceding claim, **characterised in that** the biometric sensor (34) is a multispectral biometric skin sensor.

15. Watch (100), particularly a connected mechanical watch (100), including a system (1) according to any one of claims 13 and 14.

16. Computer program comprising program code instructions for executing the steps (10 to 31) of the method according to any one of claims 1 to 12 when said program is executed by the processing unit (2) according to claim 13.
